# FASCICULE DE BREVET EUROPEEN

(11) **EP 3 871 917 B1**
(45) Date de publication et mention de la délivrance du brevet: **26.04.2023**
(21) Numéro de dépôt: 21158927.0
(22) Date de dépôt: 24.02.2021
(51) Int. Cl.: B60K 35/00

(54) **PROCÉDÉ D'OBTENTION D'UN PANNEAU D'INTERFACE COURBE, PANNEAU D'INTERFACE COURBE ET DISPOSITIF D'INTERFACE COURBE ASSOCIÉ**
VERFAHREN ZUR HERSTELLUNG EINER GEBOGENEN SCHNITTSTELLENPLATTE, GEBOGENE SCHNITTSTELLENPLATTE UND ENTSPRECHENDE GEBOGENE SCHNITTSTELLENVORRICHTUNG
METHOD FOR OBTAINING A CURVED INTERFACE PANEL, CURVED INTERFACE PANEL AND ASSOCIATED CURVED INTERFACE DEVICE

(30) Priorité: 26.02.2020 FR 2001893
(43) Date de publication de la demande: 01.09.2021
(73) Titulaire: Valeo Comfort and Driving Assistance, 94046 Créteil Cedex (FR)
(72) Inventeur: BERRY, Martial, 94046 Créteil CEDEX (FR)
(74) Mandataire: Delplanque, Arnaud

(56) Documents cités:
- WO-A1-2020/023606
- WO-A1-2020/112430
- US-A1- 2018 188 869

## Description

La présente invention concerne le domaine technique des interfaces utilisateurs, en particulier à bord d'un véhicule.

La présente invention concerne en particulier un procédé d'obtention d'un panneau d'interface selon la revendication 1, un panneau d'interface selon la revendication 11 et un dispositif d'interface intégrant un tel panneau d'interface.

La présente invention concerne plus particulièrement un procédé d'obtention d'un panneau d'interface comprenant, d'une part, un élément de façade rigide, et, d'autre part, au moins un film fonctionnel souple, selon lequel il est prévu :
- d'encoller une face avant du film fonctionnel,
- de positionner la face avant du film fonctionnel contre une face arrière de l'élément de façade rigide, et
- de presser la face avant du film fonctionnel ainsi positionnée contre la face arrière de l'élément de façade.

L'invention trouve une application particulièrement intéressante dans l'obtention d'un panneau d'interface pour véhicule automobile.

On connaît des procédés d'obtention de panneaux d'interface selon lesquels un film fonctionnel souple est collé contre un support rigide dans une chaîne automatisée. Dans ces procédés, des points de marquage prévus sur le film et sur le support sont capturés par des appareils optiques et sont comparés à des points fictifs de référence pour positionner correctement le film fonctionnel sur le support.

Cependant ces procédés ne sont pas adaptés à l'obtention de panneaux d'interface présentant une courbure.

Afin de remédier à l'inconvénient précité de l'état de la technique, la présente invention propose un procédé d'obtention d'un panneau d'interface courbe.

Plus particulièrement, on propose selon l'invention un procédé tel que défini précédemment selon lequel, l'élément de façade étant muni d'une portion plane et d'une portion courbe, la face avant du film fonctionnel est d'abord positionnée contre la portion plane de la face arrière de l'élément de façade de sorte qu'une partie d'un bord périphérique du film fonctionnel est alignée le long d'au moins un repère de positionnement prévu dans la portion plane de la face arrière de l'élément de façade, puis le film fonctionnel est pressé contre la face arrière de l'élément de façade depuis la portion plane vers la portion courbe de l'élément de façade.

Ainsi, grâce au procédé selon l'invention, le correct positionnement du film fonctionnel sur l'élément de façade est garanti. En outre, grâce au procédé selon l'invention, le risque de former des bulles d'air entre le film fonctionnel et l'élément de façade est diminué, malgré la courbure de l'élément de façade.

D'autres caractéristiques non limitatives et avantageuses de l'afficheur tête haute conforme à l'invention, prises individuellement ou selon toutes les combinaisons techniquement possibles, sont les suivantes :
- le film fonctionnel est pressé contre la face arrière de l'élément de façade au moyen d'un rouleau ou d'une contre-forme ;
- il est prévu une pluralité de films fonctionnels souples collés les uns derrière les autres, la face arrière de l'élément de façade étant munie d'au moins un repère de positionnement commun à chaque film fonctionnel ;
- il est prévu une pluralité de films fonctionnels souples collés les uns derrière les autres, la face arrière de l'élément de façade étant munie d'au moins un repère de positionnement distinct par film fonctionnel ;
- ledit au moins un film fonctionnel est un film tactile intégrant un ensemble de capteurs capacitifs ;
- ledit film tactile intégrant l'ensemble de capteurs capacitifs comporte une partie de connectique souple disposée le long du bord périphérique du film tactile situé du côté de la portion plane de l'élément de façade ;
- ledit film tactile intégrant l'ensemble de capteurs capacitifs comporte une partie de connectique souple disposée dans un plan parallèle à la portion plane de l'élément de façade lors du collage dudit film tactile contre l'élément de façade ;
- ledit élément de façade présente une partie esthétique bordant une fenêtre adaptée à laisser passer un rayonnement lumineux visible, et selon lequel ledit au moins un film fonctionnel est un écran souple adapté à générer un faisceau lumineux par sa face avant ;
- une partie de connectique de l'écran souple est collée audit écran souple du côté de la portion pane de l'élément de façade ;
- une partie de connectique de l'écran souple est collée audit écran souple après que celui-ci a été collé contre l'élément de façade ;
- ledit au moins un film fonctionnel est un assemblage d'une pluralité de films ;
- ledit au moins un repère de positionnement comprend une ligne ou une mire imprimée sur la portion plane de la face arrière de l'élément de façade.

L'invention concerne aussi un panneau d'interface comprenant :
- un élément de façade rigide dont une face avant est tournée vers un utilisateur du panneau d'interface,
- au moins un film fonctionnel souple disposé contre la face arrière de l'élément de façade, dans lequel ledit élément de façade est muni d'une portion plane et d'une portion courbe, le film fonctionnel recouvrant à la fois lesdites portions plane et courbe de l'élément de façade, et dans lequel la portion plane de la face arrière de l'élément de façade est munie d'au moins un repère de positionnement dudit film fonctionnel.

Le repère de positionnement est toujours visible en face arrière de l'élément de façade sur le panneau d'interface. Ce repère de positionnement témoigne du bon positionnement du film fonctionnel sur l'élément de façade. L'esthétique du panneau d'interface n'est pas modifiée par un utilisateur du panneau d'interface qui observe généralement la face avant dudit panneau d'interface, et non sa face arrière.

Avantageusement, dans le panneau d'interface selon l'invention, la portion courbe de l'élément de façade présente une courbure conique elliptique. Une telle courbure est particulièrement esthétique et confortable visuellement pour un utilisateur.

L'invention prévoit enfin un dispositif d'interface courbe dans lequel il est prévu un support mécanique rigide courbé, recevant, à l'avant, le panneau d'interface selon l'invention.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig. 1] est une représentation schématique en perspective avant d'un premier dispositif d'interface courbe conforme à l'invention,
[Fig. 2] est une représentation schématique en perspective de côté du dispositif d'interface courbe de la figure 1,
[Fig. 3] est une représentation schématique en perspective éclatée d'une partie d'un deuxième dispositif d'interface courbe conforme à l'invention,
[Fig. 4] est une représentation schématique en perspective arrière de l'élément de façade d'un premier mode de réalisation d'un panneau d'interface conforme à l'invention,
[Fig. 5] est une représentation schématique en perspective arrière de l'élément de façade d'un deuxième mode de réalisation d'un panneau d'interface conforme à l'invention,
[Fig. 6] est une représentation schématique d'un film fonctionnel en cours d'assemblage sur l'élément de façade de la figure 5, et,
[Fig. 7] est une représentation schématique de l'élément de façade du panneau d'interface placé sur un cône elliptique.

Il est à noter que les éléments structurels et/ou fonctionnels communs aux différentes variantes peuvent présenter les mêmes références sur ces figures et dans la description qui suit.

Par convention, dans la suite de la description, les termes « avant » et « arrière » seront définis par rapport au regard de l'utilisateur tourné vers le panneau d'interface (ou le dispositif d'interface) en position normale d'utilisation, avec la face utile (face tactile, écran...) tournée vers l'utilisateur. Ainsi, le terme « avant » désignera le côté du panneau d'interface (ou du dispositif d'interface) tourné vers l'utilisateur, tandis que le terme « arrière » désignera le côté tourné à l'opposé de celui-ci.

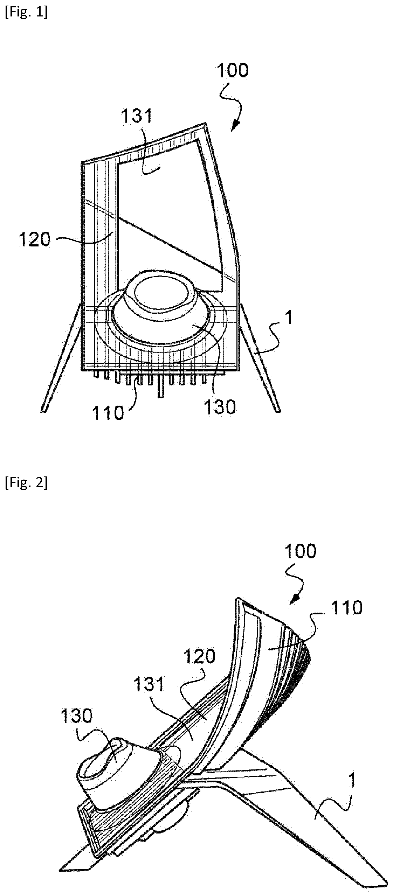

On a représenté sur les figures 1 à 3 un dispositif d'interface 100 courbe conforme à l'invention, comprenant un support mécanique 110 rigide et un panneau d'interface 120 courbe conforme à l'invention.

Dans la suite de la description, le terme « courbe » est employé pour définir une surface développable à courbure gaussienne, selon l'invention une forme géométrique de type conique ou conique elliptique. Le terme « courbe » s'oppose au terme « plan » pour définir des surfaces. Ainsi, lorsqu'une surface courbe est posée sur un plan, certaines portions de ladite surface courbe sortent du plan. Par exemple, lorsqu'un cylindre est posé sur un plan parallèle à sa hauteur, seule une droite s'étend dans ledit plan, les autres portions du cylindre s'étendant en dehors du plan. La surface formée par la paroi latérale du cylindre est ainsi qualifiée de « courbe ». Au contraire, lorsqu'une surface plane est posée sur un plan, cette surface plane s'étend intégralement dans ledit plan. Par exemple, lorsqu'un cylindre est posé sur un plan parallèle à son rayon, toute la base du cylindre s'étend dans ce plan. La surface formée par la base du cylindre est ainsi qualifiée de « plane ». Par contre, le contour d'une surface plane peut être courbe. Par exemple, la base du cylindre forme un cercle, ladite base étant une surface plane, mais le cercle présentant un contour courbe, c'est-à-dire un contour non rectiligne, et sans cassure (c'est-à-dire sans angle).

Un tel dispositif d'interface 100 peut être utilisé à bord d'un véhicule (tel qu'un véhicule automobile), par exemple pour visualiser une information ou pour commander une fonctionnalité du véhicule suite à la détection d'une instruction de l'utilisateur via le panneau d'interface 120.

Comme le montrent les figures 1 et 2, le dispositif d'interface 100 comprend à la fois un bouton de commande 130, ici de forme arrondie, actionnable par un utilisateur depuis l'avant du dispositif d'interface 100, et une interface tactile 131 pour commander une fonctionnalité ou plusieurs fonctionnalités du véhicule.

Le premier dispositif d'interface 100 représenté les figures 1 et 2 comprend un pied 1 sur lequel le support mécanique 110 repose de manière que ledit dispositif d'interface 100 peut être posé sur une surface.

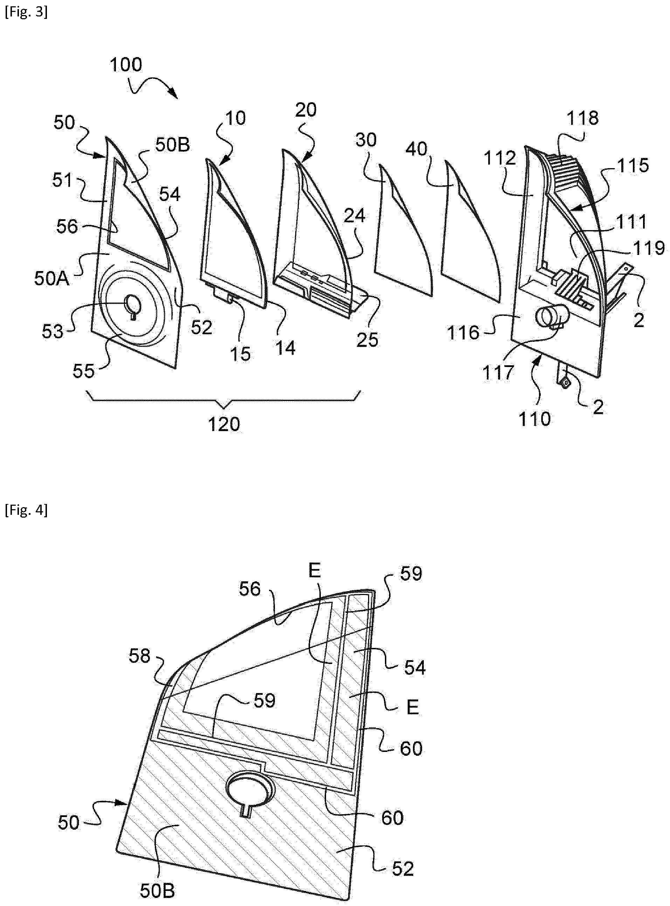

Le deuxième dispositif d'interface 100 représenté sur la figure 3 est destiné à être fixé sur une surface, par exemple sur le tableau de bord du véhicule. A cet effet, le support mécanique 110 dudit dispositif d'interface 100 comprend des moyens de fixation au tableau de bord, sous forme de pattes de fixation 2.

Hormis cette différence de mode de fixation, les premier et deuxième dispositifs d'interface 100 sont identiques, et seront décrits indifféremment, à l'aide des figures 1 à 3.

Comme le montre la figure 3, le support mécanique 110 se présente ici sous la forme d'un socle 115 rigide, avec une paroi de fond 111 à partir de laquelle s'élève une paroi latérale 112. Ce socle 115 est globalement parallélépipédique, mais la paroi de fond 111 est courbée, de sorte que le socle 115 est lui-même courbé. Une paroi plane 116 s'étend à partir d'un bord avant du socle 115, le long d'un des quatre côté du socle 115, de manière perpendiculaire à la paroi latérale 112 de ce côté du socle 115. Un manchon 117 s'étend perpendiculairement vers l'avant à partir de cette paroi plane 116. Ce manchon 117 est destiné à recevoir un pion du bouton de commande (non représenté sur la figure 3) pour la commande des fonctionnalités. Des ailettes 118 s'étendent perpendiculairement vers l'arrière à partir de la paroi de fond 111 du socle 115. Ces ailettes 118 ont un rôle purement décoratif ici.

Le socle 115 est destiné à recevoir par l'avant différents films 30, 40 souples et le panneau d'interface 120 ferme le socle 115 par l'avant et y enferme lesdits films souples 30, 40 reçus dans le socle 115.

En pratique, la paroi de fond 111 du socle 115 présente une courbure identique à celle du panneau d'interface 120. Par ailleurs, il est prévu dans la paroi de fond 111 du socle 115 une zone de connectique 119 où se rejoignent, d'une part, les connectiques électriques et/ou électroniques du panneau d'interface 120 ainsi que, d'autre part, l'alimentation électrique alimentant le dispositif d'interface 100.

Comme le montre la figure 3, d'une manière générale, le panneau d'interface 120 comprend
- un élément de façade 50 rigide dont une face avant 50A est tournée vers un utilisateur du panneau d'interface 120, et,
- au moins un film fonctionnel 10, 20 souple disposé contre la face arrière 50B de l'élément de façade 50.

L'élément de façade 50 est réalisé en matériau thermo-plastique rigide tel que le polyméthacrylate de méthyle d'acronyme PMMA pour « Poly(methyl méthacrylate) ». L'élément de façade 50 est par exemple obtenu par moulage

L'élément de façade 50 est muni d'une portion plane 52 et d'une portion courbe 54. Plus particulièrement, la face arrière 50B de l'élément de façade comporte une portion plane 52 et une portion courbe 54, qui se retrouve aussi en face avant 50A dudit élément de façade 50. Ainsi, dans la suite de la description, on parlera indifféremment de la portion plane 52 de la face arrière 50B de l'élément de façade 50, ou de la portion plane 52 de l'élément de façade 50. De même, on parlera indifféremment de la portion courbe 54 de la face arrière 50B de l'élément de façade 50, ou de la portion courbe 54 de l'élément de façade 50.

La portion plane 52 de l'élément de façade 50 est une surface qui s'étend intégralement dans un plan. Elle est destinée à recevoir par l'avant le bouton de commande 130 dudit élément de façade 50. Par l'arrière, cette portion plane 52 est destinée à venir au contact de la paroi plane 116 du support mécanique 110 du dispositif d'interface 100. Plus précisément, la portion plane 52 est percée d'une ouverture 53 destinée au passage, depuis la face arrière, du manchon 117 prévu sur le support mécanique 110. Les formes du manchon 117 et de l'ouverture 53 de l'élément de façade 50 sont complémentaires (voir figure 3), ce qui garantit le bon positionnement du panneau d'interface 120 sur le support mécanique 110. En outre, l'ouverture 53 de la portion plane 52 autorise le passage du pion du bouton de commande 130 jusque dans le manchon 117. La face avant 52A de la portion plane 52 est conformée de manière à délimiter un emplacement pour la réception dudit bouton de commande. En pratique, elle présente un rebord 55 qui entoure circulairement l'ouverture 53, ce rebord 55 étant destiné à être recouvert par le bouton de commande 130. Ainsi, le pion, le manchon 117, et l'ouverture 53 qui les reçoit garantissent à la fois, le bon positionnement du bouton de commande 130 et la commande appropriée des fonctionnalités correspondantes.

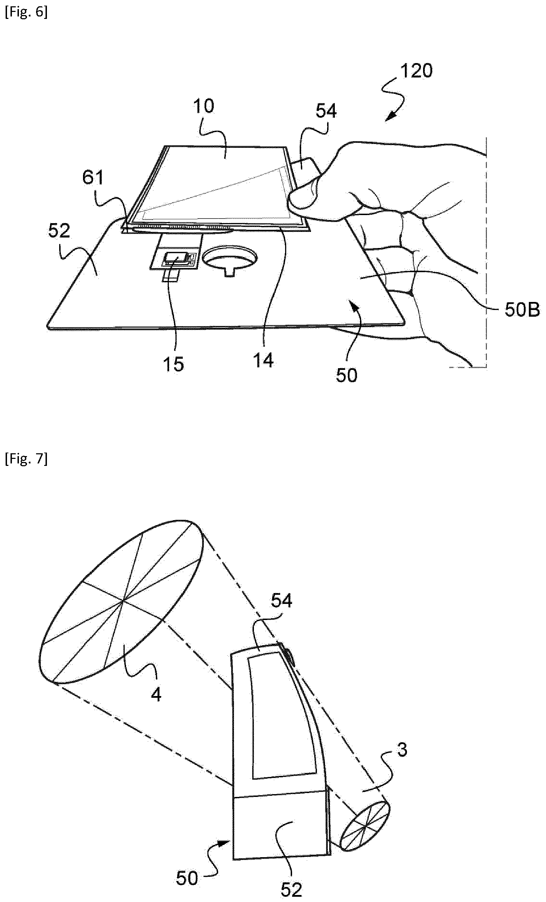

La portion courbe 54 de l'élément de façade 50 est une surface qui présente ici une courbure conique elliptique, qui ressemble à la courbure que présente la page d'un livre lorsqu'elle est tournée. Comme le montre la figure 7, la courbure de la portion courbe 54 de l'élément de façade 50 est proche de la courbure formée par la surface d'un cône 3 à base elliptique 4. Plus précisément, la portion courbe 54 de l'élément de façade 50 présente la même courbure qu'un élément dudit cône 3 qui serait découpé dans la surface latérale de ce cône 3 à base elliptique 4. Une telle surface courbe présente un premier rayon de courbure dont la valeur minimale est de 10 millimètres, et un deuxième rayon de courbure dont la valeur est strictement supérieure à celle du premier rayon de courbure, et au maximum égale à 200 millimètres. De préférence, les premier et deuxième rayons de courbure présentent chacun une valeur distincte, comprise entre 25 millimètres et 50 millimètres. Ici, comme le montre la figure 7, la portion courbe 54 de l'élément de façade 50 épouse la surface du cône 3 de manière qu'aucun des bords périphériques de la portion courbe 54 de l'élément de façade 50 ne soit tangents à une section dudit cône parallèle à la base elliptique 4 du cône 3. Une telle courbure conique elliptique est particulière esthétique et confortable visuellement pour un utilisateur.

En variante, la portion courbe de l'élément de façade pourrait être une surface courbe quelconque, c'est-à-dire une surface qui présente une courbure quelconque.

Comme le montre bien la figure 3, la portion courbe 54 de l'élément de façade 50 comporte, en face avant, une partie esthétique 51 bordant une fenêtre 56 adaptée à laisser passer un rayonnement lumineux visible, c'est-à-dire qu'elle laisse passer au moins les longueurs d'ondes approximativement comprises entre 400 nanomètres et 800 nanomètres. En pratique, la fenêtre 56 peut être une simple ouverture traversante de l'élément de façade 50, ou elle peut être fermée par un film transparent adapté à laisser passer les rayonnements lumineux visibles. Un tel film transparent permet de protéger les films fonctionnels 10, 20 situés derrière lui des poussières et des salissures induites par le toucher de l'utilisateur sur l'interface tactile 131.

Le film fonctionnel 10, 20 peut être produit au moyen d'un film plastique, par exemple transparent et/ou réalisé en un matériau tel que le poly(téréphtalate d'éthylène) d'acronyme PET pour "polyethylene terephtalate", ou en polycarbonate d'acronyme PC, sur lequel sont déposés des pistes conductrices (par exemple par sérigraphie) et/ou sont reportés ou formés des composants électroniques. Un tel film fonctionnel 10, 20 présente une certaine souplesse.

Comme le montre la figure 3, le panneau d'interface 120 comprend ici deux films fonctionnels distincts, disposés l'un derrière l'autre, au contact l'un de l'autre :
- un premier film fonctionnel 10 qui comprend un ensemble de capteurs capacitifs, plus couramment appelé film tactile 10 (ou « Touch panel » an anglais), et
- un deuxième film fonctionnel 20 qui est un écran 20.

Autrement dit, le panneau d'interface 120 comprend, d'avant en arrière, l'élément de façade 50, le premier film fonctionnel 10 (aussi appelé film tactile 10) et le deuxième film fonctionnel 20 (aussi appelé écran 20). Ainsi, la face avant du film tactile 10 est en contact avec la face arrière 50B de l'élément de façade 50, tandis que la face arrière du film tactile 10 est en contact avec la face avant de l'écran 20.

En pratique, comme il sera plus précisément décrit plus loin dans la description, les films fonctionnels 10, 20 sont collés contre l'élément de façade 50, de sorte qu'ils suivent la même courbure que celle de l'élément de façade 50.

Les capteurs capacitifs du film tactile 10 sont formés par dépôt de pistes conductrices, par exemple par sérigraphie, sur au moins une face du film tactile. Chaque capteur capacitif est par exemple formé par une antenne, présentant par exemple une forme arrondie. On peut prévoir par exemple pour une telle antenne une surface d'au moins 100 mm² et/ou une résistance surfacique inférieure à 10 kΩ carré. Des pistes conductrices sont également formées, par exemple par sérigraphie, pour amener un courant électrique au niveau de chaque antenne.

Comme le montrent les figures 3 et 6, le film tactile 10 intégrant l'ensemble de capteurs capacitifs comporte une partie de connectique 15 destinée à recevoir un courant électrique et à alimenter les capteurs capacitifs. Cette partie de connectique 15 est souple de sorte qu'elle est mobile autour de la partie qui la relie au film tactile 10 à la manière d'une charnière. La partie de connectique 15 du film tactile 10 est disposée le long du bord périphérique 14 du film tactile 10 qui est destiné à être positionné sur la portion plane 52 de l'élément de façade 50.

Le deuxième film fonctionnel 20 formant l'écran 20 comporte une pluralité de pixels (disposés sous forme d'une matrice de pixels), chacun susceptible de transmettre plus ou moins la lumière avec laquelle ils sont rétroéclairés.

Ici, l'écran 20 est par exemple un écran à cristaux liquides (ou LCD pour « Liquid Crystal Display ») à transistors en couche mince (ou TFT pour « Thin Film Transistor »), rétro-éclairé par une source de lumière comportant par exemple des LEDs. Le dispositif de rétroéclairage est ici un film lumineux 40 souple rétroéclairant l'écran 20, c'est-à-dire éclairant ledit écran 20 sur une face arrière de ce dernier. Le film lumineux 40 est distinct de l'écran 20 et comprend ici un réseau de LEDs, ici une pluralité de LEDs répartis sur toute la surface, par exemple plusieurs centaines de LEDs. Des pistes conductrices sont déposées (par exemple par sérigraphie) sur au moins une des faces du film lumineux 40 de manière à amener un courant électrique au niveau de chaque LED source de lumière. Le film lumineux 40 est réalisé dans une matière souple similaire à celle utilisée pour les films fonctionnels 10, 20, de sorte qu'il est aussi souple qu'eux.

Le film lumineux 40 est disposé de manière à s'étendre à distance constante de l'écran 20. Ainsi, il suit la même courbure que l'écran 20, à distance de celui-ci. Pour ce faire, le film lumineux 40 est maintenu contre la paroi de fond 111 du socle 115 de support mécanique 110 du dispositif d'interface 100, par exemple il y est collé. Comme la paroi de fond 111 du support mécanique 110 présente la même courbure que le panneau d'interface 120, le film lumineux 40 présente la même courbure que l'écran 20, qui lui-même est collé à l'élément de façade 50 et suit donc sa courbure.

En plus du film lumineux 40, il est ici prévu un film diffuseur 30 de lumière, disposé entre le film lumineux 40 et l'écran 20. Ce film diffuseur 30 de lumière est réalisé en matière souple. Le film diffuseur 30 de lumière est maintenu dans le support mécanique 110 par des moyens mécanique. Par exemple, il est prévu de maintenir le film diffuseur 30 à l'intérieur du socle 115, au moyen d'une gorge prévue dans la paroi latérale 112 du socle 115 du support mécanique 110. En variante, il est aussi envisageable de maintenir le film diffuseur 30 à l'intérieur du socle 115 au moyen d'un épaulement prévu dans la paroi latérale 112 du socle 115. La gorge ou l'épaulement suivent la courbure de la paroi de fond 111 du socle 115 de sorte que le film diffuseur 30 présente la même courbure que l'écran 20 et que le film lumineux 40. Grâce à la gorge ou à l'épaulement du support mécanique 110, le film diffuseur 30 est maintenu à distance constante de l'écran 20, tout en suivant la courbure de l'écran 20 (qui est imposée par la courbure de l'élément de façade 50).

En variante, on peut utiliser une technologie dans laquelle l'écran comporte des pixels émetteurs de lumière, comme dans la technologie OLED (pour "*Organic Light-Emitting Diode*") ou AMOLED (pour "*Active-Matrix Organic Light-Emitting Diode*"). Cette technologie est par exemple basée sur des dépôts en phase d'évaporation et d'encapsulation en couches minces. Il n'est pas nécessaire d'utiliser un film lumineux pour rétroéclairer un tel écran, ni un film diffuseur, puisque l'écran est lui-même capable de s'éclairer.

Chacun des premier et deuxième films fonctionnels 10, 20 est relativement souple par rapport à l'élément de façade 50 rigide, c'est-à-dire qu'il peut se courber sans s'abîmer. Chaque film fonctionnel 10, 20 est fabriqué à plat, puis est courbé lors de sa fixation par collage à l'élément de façade 50. Chaque film fonctionnel 10, 20 recouvre alors à la fois au moins une partie de la portion plane 52 et au moins une partie de la portion courbe 54 de l'élément de façade 50 rigide.

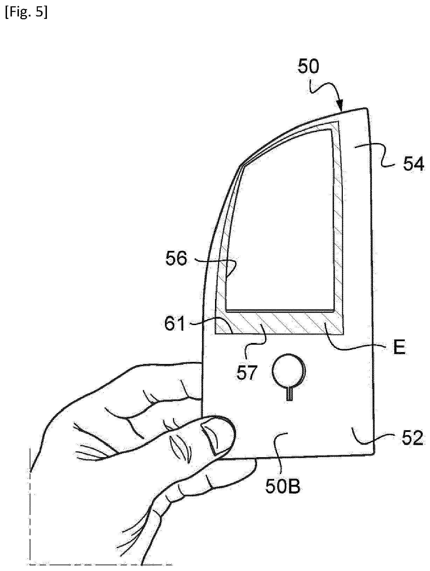

Comme le montrent les figures 4 et 5, la face arrière 50B de l'élément de façade 50 est munie d'au moins un repère de positionnement 58, 59, 60 ; 61 des films fonctionnels 10, 20 qu'il reçoit.

Ce repère de positionnement 58, 59, 60 ; 61 toujours visible sur la face arrière du panneau d'interface 120, facilite le bon positionnement des films fonctionnels 10, 20 lors de la fixation de chaque film fonctionnel 10, 20 à l'élément de façade 50.

Le repère de positionnement 58, 59, 60 ; 61 visible sur la face arrière 50B de l'élément de façade 50 comprend de préférence au moins une ligne ou une mire imprimée, positionnée sur la portion plane 52 de la face arrière 50B de l'élément de façade 50. En pratique, le repère de positionnement peut comprendre un unique repère de positionnement continu permettant de guider le positionnement de l'intégralité du bord périphérique 14, 24 du film fonctionnel 10, 20 autour de la fenêtre 56 de l'élément de façade 50. En variante, le repère de positionnement peut comprendre une pluralité de repères disposés dans des endroits spécifiques, par exemple pour guider uniquement le positionnement des angles du film fonctionnel contre l'élément de façade, au lieu de guider le positionnement de tout le bord périphérique dudit film fonctionnel.

Le repère de positionnement 58, 59, 60 ; 61 du film fonctionnel 10, 20 est ici formé par un marquage de couleur. Il est continu et délimite précisément l'emplacement E à l'intérieur duquel doit être positionné le film fonctionnel 10, 20.

Selon un premier mode de réalisation du panneau d'interface 120, représenté sur la figure 4, le repère de positionnement 58, 59, 60 se présente sous la forme d'une ligne contrastée par rapport à la couleur de la face arrière 50B de l'élément de façade 50. Par exemple, si la face arrière 50B de l'élément de façade 50 est globalement noire (la couleur noire étant représentée par des traits hachurés sur la figure 4), le repère de positionnement 58, 59, 60 peut être une ligne blanche.

Selon un deuxième mode de réalisation du panneau d'interface 120 selon l'invention, représenté sur la figure 5, le repère de positionnement 61 se présente sous la forme d'un marquage qui recouvre la quasi-totalité de la face arrière 50B de l'élément de façade 50, à l'exception d'un cadre 57 entourant la fenêtre 56 de l'élément de façade 50, ce cadre 57 représentant l'emplacement E dans lequel doit être disposé le film fonctionnel 10, 20. Tel que cela est représenté sur la figure 5, le marquage blanc recouvre ici presque toute la face arrière 50B de l'élément de façade 50 à l'exception du cadre 57 qui est noir (la couleur noire étant représentée par des traits hachurés sur la figure 5).

En pratique, quel que soit le mode de réalisation envisagé, le repère de positionnement 58, 59, 60 ; 61 comporte toujours une partie de repère dans la portion plane 52 de la face arrière 50B de l'élément de façade 50 et une partie de repère dans la portion courbe 54 de la face arrière 50B de l'élément de façade 50.

Lorsque l'élément de façade 50 reçoit une pluralité de films fonctionnels 10, 20, comme c'est le cas ici, la face arrière 50B de l'élément de façade 50 peut être munie d'au moins un repère de positionnement commun 58 ; 61 à chaque film fonctionnel 10, 20. La face arrière 50B de l'élément de façade 50 peut, en remplacement ou en supplément du repère de positionnement commun 58 ; 61 à tous les films fonctionnels 10, 20, être munie d'au moins un repère de positionnement distinct 59, 60 par film fonctionnel 10, 20. Autrement dit, dans le cas où l'élément de façade reçoit une pluralité de films fonctionnels, il est possible de prévoir un ou des repères de positionnement communs et/ou distincts pour chaque film fonctionnel.

Ici, selon le premier mode de réalisation du panneau d'interface 120, représenté sur la figure 4, le repère de positionnement 58 prévu sur deux côtés adjacents de la fenêtre 56, dans la portion courbe 54 de l'élément de façade 50, est commun aux premier et deuxième films fonctionnels 10, 20, tandis que les repères de fonctionnement 59, 60 prévus le long des deux autres côtés de la fenêtre 56, à la fois dans la portion plane 52 et dans la portion courbe 54 de l'élément de façade 50, sont distincts pour chaque film fonctionnel 10, 20. Pour mieux les distinguer il est envisageable que la ligne de marquage formant le repère de positionnement 59, 60 distinct de chaque film fonctionnel 10, 20 soit de couleur différente.

Selon le deuxième mode de réalisation du panneau d'interface 120 représenté sur la figure 5, le repère de positionnement 61 prévu sur l'élément de façade est commun aux deux films fonctionnels 10, 20.

Hormis ces différences sur les repères de positionnement 58, 59, 60, 61 les premier et deuxième modes de réalisation du panneau d'interface 120 selon l'invention sont identiques.

La suite de la description vise plus particulièrement à décrire le procédé d'obtention du panneau d'interface 120 décrit précédemment, comprenant, d'une part, l'élément de façade 50 rigide, et, d'autre part, au moins un des films fonctionnels 10, 20 souples.

Il est prévu dans un premier temps de se munir d'au moins un des premier et deuxième films fonctionnels 10, 20 plans, ainsi que de l'élément de façade 50 courbe, muni de la portion plane 52 et de la portion courbe 54 décrites précédemment.

Il est ensuite prévu d'encoller la face avant du premier film fonctionnel 10 (film tactile 10) qui est destiné à être collé contre l'élément de façade 50, c'est-à-dire de répartir une couche de colle sur cette face. La colle est une colle transparente pour les rayonnements lumineux visibles. Une telle colle est généralement associée à l'acronyme OCA, pour « Optical Clear Adhesive » en anglais.

Il est ensuite prévu de positionner la face avant du film tactile 10 contre la face arrière 50B de l'élément de façade 50 rigide, et de presser la face avant du film tactile 10 ainsi positionnée contre la face arrière 50B de l'élément de façade 50.

Plus précisément, il est fondamental de positionner la face avant du film tactile 10 d'abord contre la portion plane 52 de la face arrière 50B de l'élément de façade 50 de sorte qu'une partie d'un bord périphérique 14 du film tactile 10 est alignée le long de la partie du repère de positionnement 59 ; 61 associé au film tactile 10 qui est prévue dans ladite portion plane 52. Ensuite, le film tactile 10 est pressé contre la face arrière 50B de l'élément de façade 50 depuis la portion plane 52 vers la portion courbe 54 de l'élément de façade 50. Cette étape de pressage est réalisée en veillant à ce que le bord périphérique 14 du film tactile 10 se positionne bien le long de la partie du repère de positionnement 58, 59 ; 61 associé au film tactile 10 qui est située dans la portion courbe 54 de l'élément de façade 50.

En pratique, l'étape de pressage du film tactile 10 contre la face arrière 50B de l'élément de façade 50 est mise en oeuvre au moyen d'un rouleau, type rouleau de presse ou rouleau de laminage. Elle peut aussi être mise en oeuvre au moyen d'une contre-forme, c'est-à-dire d'une pièce de forme complémentaire à la forme de l'élément de façade 50. Avantageusement, un tel rouleau ou une telle contre-forme permet de chasser efficacement l'air éventuellement présent entre les deux éléments collés, à savoir ici entre la face arrière 50B de l'élément de façade 50 et la face avant du film tactile 10. En outre, un tel rouleau ou une telle contre-forme permet d'appliquer une pression suffisante pour faire adhérer la colle entre les deux éléments collés. En variante encore, l'étape de pressage pourrait être mise en oeuvre au moyen d'un élément adapté à appuyer uniformément contre la face arrière de l'élément de façade.

Pour ne pas gêner le pressage du film tactile 10 contre l'élément de façade 50, la partie de connectique 15 du film tactile 10, disposée le long du bord périphérique dudit film tactile 10 aligné contre le repère de positionnement situé dans la portion plane 52 de l'élément de façade 50, est positionnée parallèlement à la portion plane 52 de l'élément de façade 50 lors du pressage.

Le deuxième film fonctionnel, ici l'écran 20, est ensuite collé contre le film tactile 10 déjà en place sur l'élément de façade 50. Pour ce faire, la face avant de l'écran 20 est encollée puis disposée contre la face arrière du film tactile 10 déjà collé à l'élément de façade 50. De la même manière que ce qui est mis en oeuvre pour coller le film tactile 10, la face avant de l'écran 20 est positionnée d'abord contre la portion plane 52 de la face arrière 50B de l'élément de façade 50 de sorte qu'une partie du bord périphérique 24 de l'écran 20 est alignée le long de la partie du repère de positionnement 60 ; 61 associé à l'écran 20 qui est prévue dans ladite portion plane 52. Ensuite, l'écran 20 est pressé contre la face arrière du film tactile 10, et par conséquent contre la face arrière 50B de l'élément de façade 50, depuis la portion plane 52 vers la portion courbe 54 de l'élément de façade 50. Cette étape de pressage est réalisée en veillant à ce que le bord périphérique 24 de l'écran 20 se positionne bien le long de la partie du repère de positionnement 58, 60 ; 61 associé à l'écran 20 qui est située dans la portion courbe 54 de l'élément de façade 50.

Avantageusement, quel que soit le film fonctionnel 10, 20 collé, le fait de commencer par aligner le film fonctionnel 10, 20 dans la portion plane 52 de l'élément de façade 50 facilite le positionnement du film fonctionnel 10, 20 et diminue le risque de former des bulles d'air lors du pressage de chaque film fonctionnel 10, 20.

L'utilisation des repères de positionnement 58, 59, 60 comme guides lors du pressage de chaque film fonctionnel 10, 20 garantit que les films fonctionnels 10, 20 sont parfaitement alignés les uns par rapport aux autres, et qu'ils sont chacun centrés par rapport à la fenêtre 56 transparente de l'élément de façade 50.

Une fois le collage et le pressage terminés pour chaque film fonctionnel 10, 20, une partie de connectique 25 rigide associée à l'écran 20 est collée audit écran 20 pour s'étendre perpendiculairement audit écran 20. La partie de connectique 25 de l'écran 20 est plus particulièrement collée au bord périphérique 24 de l'écran 20 qui est situé du côté de la portion plane 52 de l'élément de façade 50.

La partie de connectique 15 du film tactile 10 est ensuite redressée, pour s'étendre globalement perpendiculairement à la face arrière 50B de l'élément de façade 50.

Le panneau d'interface 120 est ainsi finalisé. Il est ensuite assemblé sur le support mécanique 110 du dispositif d'interface 100.

Plus précisément, le film lumineux 40 est collé contre la face avant de la paroi de fond 111 du socle 115 du support mécanique 110, puis le film diffuseur 30 est inséré dans la gorge ou derrière l'épaulement prévu dans la paroi latérale 112 du socle 115 du support mécanique 110. Le panneau d'interface 120 obtenu précédemment est ensuite inséré par l'avant sur le support mécanique 110, de manière que le manchon 117 du support mécanique 110 s'insère dans l'ouverture 53 correspondante du panneau d'interface 120, en veillant à ce que les parties de connectiques 15, 25 de l'écran 20 et du film tactile 10 rejoignent la zone de connectique 119 prévue dans le socle 115 du support mécanique 110. Des moyens mécaniques sont prévus le long du bord avant du socle 115 du support mécanique 110 pour retenir le panneau d'interface 120 sur le support mécanique 110.

En variante, pour fixer le panneau d'interface 120 à au support mécanique 110, on peut prévoir qu'une partie de la face arrière 50B de l'élément de façade 50, bordant le bord périphérique de l'élément de façade 50, soit collée contre le bord avant du socle 115 et contre la face avant de la paroi plane 116 du support mécanique 110. En particulier, la portion plane 52 de la face arrière 50B de l'élément de façade 50 peut être collée contre la paroi plane 116 du support mécanique 110.

En variante à ce qui a été décrit, d'autres films fonctionnels peuvent être collés à l'arrière de l'élément de façade, de la même manière que ce qui a été décrit précédemment. Ces autres films fonctionnels peuvent venir en remplacement des films fonctionnels précédemment décrits, ou en supplément de ceux-ci, selon la fonctionnalité finale désirée pour le dispositif d'interface. Si ces autres films fonctionnels nécessitent une partie de connectique, lorsque ladite partie de connectique est souple, elle est préférentiellement placée parallèle à la portion plane de l'élément de façade lors du pressage, tandis que lorsque ladite partie de connectique est rigide, elle est préférentiellement ajoutée après le pressage du film fonctionnel correspondant.

Bien entendu, diverses autres modifications peuvent être apportées à l'invention dans le cadre des revendications annexées.

Selon une variante non représentée, il est tout à fait envisageable que le panneau d'interface comprenne pour seul film fonctionnel le film tactile 10.

Il est aussi envisageable que le panneau d'interface comprenne pour seul film fonctionnel l'écran 20 qui est alors directement collé contre la face arrière de l'élément de façade.

Il est encore envisageable que le film fonctionnel comprenne une pluralité de films, c'est-à-dire que le film fonctionnel soit formé par un assemblage de films. Ainsi par exemple, un tel film fonctionnel comprend le film tactile 10 précédemment décrit déjà assemblé à l'écran 20 précédemment décrit. Ce film fonctionnel formé par assemblage du film tactile et de l'écran 20 est alors directement collé contre la face arrière de l'élément de façade.

Bien entendu le film fonctionnel pourrait encore être formé par tout autre film qui soit souple, qu'il s'agisse d'un film avec une unique fonction, ou d'un film avec plusieurs fonctions obtenues par l'assemblage préalable de plusieurs films.

## Revendications

1. Procédé d'obtention d'un panneau d'interface (120) comprenant, d'une part, un élément de façade (50) rigide, et, d'autre part, au moins un film fonctionnel (10, 20) souple, selon lequel il est prévu :
- d'encoller une face avant du film fonctionnel (10, 20),
- de positionner la face avant du film fonctionnel (10, 20) contre une face arrière (50B) de l'élément de façade (50) rigide, et
- de presser la face avant du film fonctionnel (10, 20) ainsi positionnée contre la face arrière (50B) de l'élément de façade (50), la face arrière de l'élément de façade (50) étant muni d'une portion plane (52) et d'une portion courbe (54) de surface développable à courbure gaussienne conique ou conique elliptique, la face avant du film fonctionnel (10, 20) est d'abord positionnée contre la portion plane (52) de la face arrière (50B) de l'élément de façade (50) de sorte qu'une partie d'un bord périphérique (14, 24) du film fonctionnel (10, 20) est alignée le long d'au moins un repère de positionnement (58, 59, 60 ; 61) prévu dans la portion plane (52) de la face arrière (50B) de l'élément de façade (50), puis le film fonctionnel (10, 20) est pressé contre la face arrière (50B) de l'élément de façade (50) depuis la portion plane (52) vers la portion courbe (54) de la face arrière de l'élément de façade (50).

2. Procédé selon la revendication 1, selon lequel le film fonctionnel (10, 20) est pressé contre la face arrière (50B) de l'élément de façade (50) au moyen d'un rouleau ou d'une contre-forme.

3. Procédé selon l'une des revendications 1 et 2, selon lequel il est prévu une pluralité de films fonctionnels (10, 20) souples collés les uns derrière les autres, la face arrière (50B) de l'élément de façade (50) étant munie d'au moins un repère de positionnement commun (58 ; 61) à chaque film fonctionnel (10, 20).

4. Procédé selon l'une des revendications 1 à 3, selon lequel il est prévu une pluralité de films fonctionnels (10, 20) souples collés les uns derrière les autres, la face arrière (50B) de l'élément de façade (50) étant munie d'au moins un repère de positionnement distinct (59, 60) par film fonctionnel (10, 20).

5. Procédé selon l'une des revendications 1 à 4, selon lequel ledit au moins un film fonctionnel (10, 20) est un film tactile (10) intégrant un ensemble de capteurs capacitifs.

6. Procédé selon la revendication 5, selon lequel ledit film tactile (10) intégrant l'ensemble de capteurs capacitifs comporte une partie de connectique (15) souple disposée le long du bord périphérique (14) du film tactile (10) situé du côté de la portion plane (52) de l'élément de façade (50).

7. Procédé selon l'une des revendications 1 à 6, selon lequel ledit élément de façade (50) présente une partie esthétique (51) bordant une fenêtre (56) adaptée à laisser passer un rayonnement lumineux visible, et selon lequel ledit au moins un film fonctionnel (10, 20) est un écran (20) souple adapté à générer un faisceau lumineux par sa face avant.

8. Procédé selon la revendication 7, selon lequel une partie de connectique (25) de l'écran (20) souple est collée audit écran (20) souple le long du bord périphérique (24) dudit écran (20) situé du côté de la portion plane (52) dudit élément de façade (50).

9. Procédé selon l'une des revendications 1 à 4, selon lequel ledit au moins un film fonctionnel (10, 20) est un assemblage d'une pluralité de films.

10. Procédé selon l'une des revendications 1 à 9, selon lequel ledit au moins un repère de positionnement (58, 59, 60 ; 61) comprend une ligne ou une mire imprimée sur la portion plane (52) de la face arrière (50B) de l'élément de façade (50).

11. Panneau d'interface (120) comprenant :
- un élément de façade (50) rigide dont une face avant (50A) est tournée vers un utilisateur du panneau d'interface (120),
- au moins un film fonctionnel (10, 20) souple disposé contre une face arrière (50B) de l'élément de façade (50), ladite face arrière de l'élément de façade (50) étant muni d'une portion plane (52) et d'une portion courbe (54) de surface développable à courbure gaussienne conique ou conique elliptique, le film fonctionnel (10, 20) recouvrant à la fois lesdites portions plane (52) et courbe (54) de la face arrière de l'élément de façade (50), et en ce que la portion plane (52) de la face arrière (50B) de l'élément de façade(50) est munie d'au moins un repère de positionnement (58, 59, 60 ; 61) dudit film fonctionnel (10,20).

12. Panneau d'interface (120) selon la revendication 11, dans lequel la portion courbe (54) de l'élément de façade (50) présente une courbure conique elliptique.

13. Dispositif d'interface (100) courbe dans lequel il est prévu un support mécanique (110) rigide courbé, recevant et comprenant, à l'avant, le panneau d'interface (120) selon l'une des revendications 11 et 12.

## Patentansprüche

1. Verfahren zur Herstellung eines Schnittstellenfelds (120), das einerseits ein starres Fassadenelement (50) und andererseits wenigstens einen biegsamen Funktionsfilm (10, 20) umfasst, wobei Folgendes vorgesehen ist:
- Auftragen von Klebstoff auf eine Vorderseite des Funktionsfilms (10, 20),
- Positionieren der Vorderseite des Funktionsfilms (10, 20) an einer Rückseite (50B) des starren Fassadenelements (50), und
- Drücken der Vorderseite des so positionierten Funktionsfilms (10, 20) an die Rückseite (50B) des Fassadenelements (50),
wobei die Rückseite des Fassadenelements (50) mit einem ebenen Teilbereich (52) und einem gekrümmten Teilbereich (54) einer abwickelbaren Fläche mit kegelförmiger oder elliptisch-kegelförmiger gaußscher Krümmung versehen ist, die Vorderseite des Funktionsfilms (10, 20) zunächst an dem ebenen Teilbereich (52) der Rückseite (50B) des Fassadenelements (50) positioniert wird, so dass ein Abschnitt eines Umfangsrands (14, 24) des Funktionsfilms (10, 20) entlang wenigstens einer Positionierungsmarkierung (58, 59, 60; 61) ausgerichtet ist, die im ebenen Teilbereich (52) der Rückseite (50B) des Fassadenelements (50) vorgesehen ist, dann der Funktionsfilm (10, 20) an die Rückseite (50B) des Fassadenelements (50) vom ebenen Teilbereich (52) zum gekrümmten Teilbereich (54) der Rückseite des Fassadenelements (50) gedrückt wird.

2. Verfahren nach Anspruch 1, wobei der Funktionsfilm (10, 20) mittels einer Walze oder einer Gegenform an die Rückseite (50B) des Fassadenelements (50) gedrückt wird.

3. Verfahren nach einem der Ansprüche 1 und 2, wobei eine Mehrzahl von biegsamen Funktionsfilmen (10, 20) vorgesehen ist, die hintereinander geklebt sind, wobei die Rückseite (50B) des Fassadenelements (50) mit wenigstens einer für jeden Funktionsfilm (10, 20) gemeinsamen Positionierungsmarkierung (58; 61) versehen ist.

4. Verfahren nach einem der Ansprüche 1 bis 3, wobei eine Mehrzahl von biegsamen Funktionsfilmen (10, 20) vorgesehen ist, die hintereinander geklebt sind, wobei die Rückseite (50B) des Fassadenelements (50) mit wenigstens einer für jeden Funktionsfilm (10, 20) gesonderten Positionierungsmarkierung (59, 60) versehen ist.

5. Verfahren nach einem der Ansprüche 1 bis 4, wobei der wenigstens eine Funktionsfilm (10, 20) ein taktiler Film (10) ist, der einen Satz kapazitiver Sensoren enthält.

6. Verfahren nach Anspruch 5, wobei der taktile Film (10), der den Satz kapazitiver Sensoren enthält, einen biegsamen Anschlussabschnitt (15) aufweist, der entlang dem Umfangsrand (14) des taktilen Films (10) angeordnet ist, der sich auf der Seite des ebenen Teilbereichs (52) des Fassadenelements (50) befindet.

7. Verfahren nach einem der Ansprüche 1 bis 6, wobei das Fassadenelement (50) einen Ästhetikabschnitt (51) aufweist, der ein Fenster (56) umrandet, das geeignet ist, eine sichtbare Lichtstrahlung hindurchzulassen, und wobei der wenigstens eine Funktionsfilm (10, 20) ein biegsamer Schirm (20) ist, der geeignet ist, durch seine Vorderseite ein Lichtbündel zu erzeugen.

8. Verfahren nach Anspruch 7, wobei ein Anschlussabschnitt (25) des biegsamen Schirms (20) entlang dem Umfangsrand (24) des Schirms (20) auf den Schirm (20) geklebt ist, der sich auf der Seite des ebenen Abschnitts (52) des Fassadenelements (50) befindet.

9. Verfahren nach einem der Ansprüche 1 bis 4, wobei der wenigstens eine Funktionsfilm (10, 20) eine Zusammensetzung einer Mehrzahl von Filmen ist.

10. Verfahren nach einem der Ansprüche 1 bis 9, wobei die wenigstens eine Positionierungsmarkierung (58, 59, 60; 61) eine Linie oder ein Muster umfasst, die bzw. das auf den ebenen Abschnitt (52) der Rückseite (50B) des Fassadenelements (50) gedruckt ist.

11. Schnittstellenfeld (120) umfassend:
- ein starres Fassadenelement (50), dessen eine Vorderseite (50A) einem Benutzer des Schnittstellenfelds (120) zugewandt ist,
- wenigstens einen biegsamen Funktionsfilm (10, 20), der an einer Rückseite (50B) des Fassadenelements (50) angeordnet ist, wobei die Rückseite des Fassadenelements (50) mit einem ebenen Teilbereich (52) und einem gekrümmten Teilbereich (54) mit einer abwickelbaren Fläche mit kegelförmiger oder elliptisch-kegelförmiger gaußscher Krümmung versehen ist, wobei der Funktionsfilm (10, 20) sowohl den ebenen Teilbereich (52) als auch den gekrümmten Teilbereich (54) der Rückseite des Fassadenelements (50) bedeckt,
und dadurch, dass der ebene Teilbereich (52) der Rückseite (50B) des Fassadenelements (50) mit wenigstens einer Positionierungsmarkierung (58, 59, 60; 61) des Funktionsfilms (10, 20) versehen ist.

12. Schnittstellenfeld (120) nach Anspruch 11, wobei der gekrümmte Abschnitt (54) des Fassadenelements (50) eine elliptisch-kegelförmige Krümmung aufweist.

13. Gekrümmte Schnittstellenvorrichtung (100), wobei ein gekrümmter starrer mechanischer Träger (110) vorgesehen ist, der vorne das Schnittstellenfeld (120) nach einem der Ansprüche 11 und 12 aufnimmt und umfasst.

## Claims

1. Method for obtaining an interface panel (120) comprising, on the one hand, a rigid façade element (50), and, on the other hand, at least one flexible functional film (10, 20), wherein provision is made:
- to apply adhesive to a front face of the functional film (10, 20),
- to position the front face of the functional film (10, 20) against a rear face (50B) of the rigid façade element (50), and
- to press the front face of the functional film (10, 20) thus positioned against the rear face (50B) of the façade element (50),
the rear face of the façade element (50) being provided with a flat portion (52) and a curved portion (54) of developable surface with Gaussian curvature that is conical or elliptical conical, the front face of the functional film (10, 20) is first of all positioned against the flat portion (52) of the rear face (50B) of the façade element (50) such that a part of a peripheral edge (14, 24) of the functional film (10, 20) is aligned along at least one positioning marker (58, 59, 60; 61) provided in the flat portion (52) of the rear face (50B) of the façade element (50), then the functional film (10, 20) is pressed against the rear face (50B) of the façade element (50) from the flat portion (52) towards the curved portion (54) of the rear face of the façade element (50) .

2. Method according to Claim 1, wherein the functional film (10, 20) is pressed against the rear face (50B) of the façade element (50) by means of a roller or a counter-form.

3. Method according to either of Claims 1 and 2, wherein there is provided a plurality of flexible functional films (10, 20) bonded one behind another, the rear face (50B) of the façade element (50) being provided with at least one positioning marker (58; 61) common to each functional film (10, 20).

4. Method according to one of Claims 1 to 3, wherein there is provided a plurality of flexible functional films (10, 20) bonded one behind another, the rear face (50B) of the façade element (50) being provided with at least one separate positioning marker (59, 60) per functional film (10, 20).

5. Method according to one of Claims 1 to 4, wherein said at least one functional film (10, 20) is a tactile film (10) incorporating a set of capacitive sensors.

6. Method according to Claim 5, wherein said tactile film (10) incorporating the set of capacitive sensors has a flexible connecting part (15) disposed along the peripheral edge (14) of the tactile film (10) situated on the side of the flat portion (52) of the façade element (50) .

7. Method according to one of Claims 1 to 6, wherein said façade element (50) has an aesthetic part (51) bordering a window (56) designed to let visible light radiation pass, and wherein said at least one functional film (10, 20) is a flexible screen (20) designed to generate a light beam via its front face.

8. Method according to Claim 7, wherein a connecting part (25) of the flexible screen (20) is bonded to said flexible screen (20) along the peripheral edge (24) of said screen (20) situated on the side of the flat portion (52) of said façade element (50).

9. Method according to one of Claims 1 to 4, wherein said at least one functional film (10, 20) is an assembly of a plurality of films.

10. Method according to one of Claims 1 to 9, wherein said at least one positioning marker (58, 59, 60; 61) comprises a line or a pattern printed on the flat portion (52) of the rear face (50B) of the façade element (50).

11. Interface panel (120) comprising:
- a rigid façade element (50) of which a front face (50A) is turned towards a user of the interface panel (120),
- at least one flexible functional film (10, 20) disposed against a rear face (50B) of the façade element (50),
said rear face of the façade element (50) being provided with a flat portion (52) and a curved portion (54) of developable surface with Gaussian curvature that is conical or elliptical conical, the functional film (10, 20) covering both said flat portion (52) and said curved portion (54) of the rear face of the façade element (50), and in that the flat portion (52) of the rear face (50B) of the façade element (50) is provided with at least one positioning marker (58, 59, 60; 61) for said functional film (10, 20).

12. Interface panel (120) according to Claim 11, wherein the curved portion (54) of the façade element (50) has an elliptical conical curvature.

13. Curved interface device (100) in which there is provided a curved rigid mechanical support (110), receiving and comprising, at the front, the interface panel (120) according to either of Claims 11 and 12.
